# EUROPEAN PATENT APPLICATION

(11) **EP 4 231 394 A1**
(43) Date of publication of application: **23.08.2023**
(21) Application number: 21947368.3
(22) Date of filing: 24.12.2021
(51) Int. Cl.: H01M 6/14, H01M 6/18

(54) **ELECTRODE ASSEMBLY AND MANUFACTURING METHOD THEREFOR, SECONDARY BATTERY, BATTERY MODULE, BATTERY PACK, AND ELECTRICAL DEVICE**

(71) Applicant: Contemporary Amperex Technology Co., Limited, Ningde City, Fujian 352100 (CN)
(72) Inventor: HE, Xiaoning, Fujian 352100 (CN); XUE, Wenwen, Fujian 352100 (CN); LIU, Chengyong, Fujian 352100 (CN); ZHONG, Chengbin, Fujian 352100 (CN)
(74) Representative: Holt, Lucy Rose
(86) International application number: PCT/CN2021/141188
(87) International publication number: WO 2023/115535

(57) **Abstract**

This application provides an electrode assembly and a preparation method thereof, a secondary battery, a battery module, a battery pack, and an electric apparatus. The electrode assembly provided by this application includes a positive electrode, a negative electrode, and a separator located between the positive electrode and the negative electrode, where the positive electrode and the separator contain a solid electrolyte, a liquid electrolyte is present between the separator and the negative electrode, and a mass ratio of the solid electrolyte to the liquid electrolyte is 1:1 to 8:1, optionally 2:1 to 6:1.

## Description

### TECHNICAL FIELD

This application relates to the field of lithium battery technologies, and in particular, to an electrode assembly and a preparation method thereof, a secondary battery, a battery module, a battery pack, and an electric apparatus.

### BACKGROUND

In recent years, with increasingly wide application of lithium-ion batteries, lithium-ion batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Along with the great development of lithium-ion batteries, higher requirements are imposed on their energy density, cycling performance, safety performance, and the like.

Using lithium metal as a negative electrode material for batteries can further improve energy density of battery cells, but lithium metal has such high reaction activity that it continuously reacts with the electrolyte solution, resulting in relatively low cycling reversibility of lithium. Using a high-concentration electrolyte solution can effectively reduce side reactions between lithium metal and the electrolyte solution, improving reversibility of lithium metal. However, during actual application, due to the high viscosity of high-concentration electrolyte solutions, it is difficult for them to infiltrate into electrode plates and separators, making it hard for batteries to undergo proper cycling. Hence, further improvement is expected on the technology with lithium metal as a negative electrode material for batteries.

### SUMMARY

This application is made in view of the above problems, aiming at providing an electrode assembly having both high energy density and good cycling performance and a preparation method thereof. Furthermore, the objective of this application is to provide a secondary battery having both high energy density and good cycling performance, and a battery module, battery pack, and electric apparatus including such secondary battery.

To achieve the above objective, a first aspect of this application provides an electrode assembly, including
a positive electrode, a negative electrode, and a separator located between the positive electrode and the negative electrode, where
the positive electrode and the separator contain a solid electrolyte,
a liquid electrolyte is present between the separator and the negative electrode, and
a mass ratio of the solid electrolyte to the liquid electrolyte is 1:1 to 8:1, optionally 2: 1 to 6: 1.

A second aspect of this application provides a preparation method of electrode assembly, including the following steps:
a step of injecting an electrolyte solution to cure into an electrode assembly body including a positive electrode, a negative electrode, and a separator located between the positive electrode and the negative electrode;
a step of implementing a curing reaction via in-situ polymerization on the electrolyte solution to cure to obtain a solid electrolyte; and
a step of injecting a liquid electrolyte into the electrode assembly body.

In some embodiments, the liquid electrolyte contains a solvent and an electrolytic salt with a concentration of 2-6 M/L.

In some embodiments, the solvent is one or more selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, methylsulfone acetate, and diethyl sulfone.

In some embodiments, the electrolytic salt is one or more selected from lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solid electrolyte is formed by an electrolyte solution to cure through a curing reaction via in-situ polymerization.

In some embodiments, the electrolyte solution to cure contains a first monomer, a second monomer, a first electrolyte solution, and an initiator, where
optionally, the first monomer is an acrylic acid (ester) monomer and the second monomer is a carbonic ester monomer, and/or
optionally, a mass ratio of the first monomer, the second monomer, and the first electrolyte solution is first monomer:second monomer:first electrolyte solution=(1%-20%):(1%-15%):(50%-99%), optionally first monomer: second monomer:first electrolyte solution=(3%-10%):(1%-15%):(80%-95%).

In some embodiments, the first monomer is one or more selected from acrylic acid, methacrylic acid, methyl methacrylate, butyl methacrylate, methyl acrylate, ethyl acrylate, butyl acrylate, cyanoacrylate, polyethylene glycol diacrylate, tetraethylene glycol diacrylate, ethoxylated trimethylolpropane triacrylate, trimethylolpropane trimethacrylate, polypropylene glycol dimethacrylate, trimethylolpropane triacrylate, trimethylolpropane trimethacrylate, polycyclohexyl acrylate, trimethylolpropane triacrylate, trimethylolpropane trimethacrylate, ethylene glycol dimethacrylate, ethylene glycol dimethacrylate, N,N'-p-phenylbismaleimide, zinc diacrylate, and zinc dimethacrylate; and/or
the second monomer is one or more selected from vinylene carbonate, vinyl ethylenecarbonate, ethylene carbonate, propylene carbonate, butylene carbonate, ethylene fluoroethylene carbonate, and ethyl chlorocarbonate; and/or
the first electrolyte solution contains an electrolytic salt, where the electrolytic salt is one or more selected from lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate; and/or
the initiator is one or more selected from an organic peroxygen initiator, an inorganic peroxygen initiator, and an azo initiator; and/or
with respect to an aggregate mass of the first monomer and the second monomer, amount of the initiator is below 1-10wt%, optionally below 1-5wt%.

In some embodiments, the organic peroxygen initiator is one or more selected from peroxydicarbonamide, peroxycarboxylic acid esters, and peroxydicarbonate, where optionally, the organic peroxygen initiator comprises one or more of dibenzoyl peroxide, lauroyl peroxide, tert-butyl peroxybenzoate, tert-butyl peroxypivalerate, diisopropyl peroxydicarbonate, and dicyclohexyl peroxydicarbonate; and/or
the inorganic peroxygen initiator is selected from one or two of potassium persulfate and ammonium persulfate; and/or
the azo initiator is selected from one or two of azobisisobutyronitrile and azobisisobutyronitrile.

In some embodiments, the positive electrode contains a positive electrode material, where the positive electrode material includes at least one of lithium nickel cobalt manganate, lithium nickel cobalt aluminate, and lithium iron phosphate; and/or
the negative electrode contains a negative electrode material, where the negative electrode material includes at least one of lithium metal and lithium metal alloy.

In some embodiments, a reaction time of the curing reaction via in-situ polymerization is 10 seconds to 12 hours, optionally 10 seconds to 300 seconds.

In some embodiments, an initiation method of the curing reaction via in-situ polymerization is one or more selected from ultraviolet initiation, electron beam initiation, and initiator initiation; where
optionally, in the case of ultraviolet initiation, an ultraviolet irradiation power is 2-5 W/cm² and an ultraviolet irradiation time is 10-300 seconds;
optionally, in the case of electron beam initiation, an adsorption amount of a battery unit is 30 Gy to 30 kGy; and
optionally, in the case of initiator initiation, a heating temperature is 50°C to 85°C and a heating time is 1-12 hours.

A third aspect of this application provides a secondary battery including the electrode assembly according to this application or an electrode assembly prepared by using the preparation method of electrode assembly according to this application.

A fourth aspect of this application provides a battery module including the secondary battery according to this application.

A fifth aspect of this application provides a battery pack including the battery module according to this application.

A sixth aspect of this application provides an electric apparatus including at least one of the secondary battery according to this application, the battery module according to this application, or the battery pack according to this application.

In the electrode assembly according to this application, a high-concentration electrolyte solution is used to protect the cycling performance of the negative electrode material formed by lithium metal and, to solve the problem of difficult infiltration of high-concentration electrolyte solutions, in-situ curing is used to facilitate infiltration into the positive electrode and the separator. In addition, in the electrode assembly according to this application, the high-concentration electrolyte solution is injected at the second time of injection to ensure contact between the separator and lithium metal, so that transmission paths for lithium ions of the battery can be guaranteed.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic diagram of a secondary battery according to an embodiment of this application.
FIG. 2 is a schematic diagram of a battery module according to an embodiment of this application.
FIG. 3 is a schematic diagram of a battery pack according to an embodiment of this application.
FIG. 4 is an exploded view of FIG. 3.
FIG. 5 is a schematic diagram of an electric apparatus according to an embodiment of this application.
FIG. 6 is a schematic diagram of a preparation method of electrode assembly according to an embodiment of this application.

Reference signs are as follows:
1. battery pack; 2. upper box body; 3. lower box body; 4. battery module; 5. secondary battery; and
61. positive electrode; 62. separator; 63. negative electrode; 64. liquid electrolyte; and 65. solid electrolyte.

### DESCRIPTION OF EMBODIMENTS

The following specifically discloses embodiments of the electrode assembly and preparation method thereof, secondary battery, battery module, battery pack, and electric apparatus of this application in detail with appropriate reference to the accompanying drawings. However, unnecessary details may be omitted. For example, detailed descriptions of well-known matters and repeated descriptions of actually identical structures have been omitted. This is to avoid unnecessary prolonging of the following descriptions, for ease of understanding by persons skilled in the art. In addition, the accompanying drawings and the following descriptions are provided to help persons skilled in the art fully understand this application but are not intended to limit the subject matter recorded in the claims.

"Ranges" disclosed in this application are defined in the form of lower and upper limits. A given range is defined by selecting a lower limit and an upper limit, and the selected lower and upper limits define boundaries of this special range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, this is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined to form new technical solutions.

Unless otherwise specified, all the technical features and optional technical features of this application can be combined to form new technical solutions.

Unless otherwise specified, all the steps in this application can be performed sequentially or randomly, and preferably, sequentially. For example, a method including steps (a) and (b) indicates that the method may include steps (a) and (b) in order, or may include steps (b) and (a) in order. For example, that the method may further include step (c) indicates that step (c) may be added to the method at any place of order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, the terms "include" and "contain" can mean that other unlisted components may also be included or contained, or that only listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Electrode assembly]

In an embodiment of this application, this application provides an electrode assembly including
a positive electrode, a negative electrode, and a separator located between the positive electrode and the negative electrode, where
the positive electrode and the separator contain a solid electrolyte,
a liquid electrolyte is present between the separator and the negative electrode, and
a mass ratio of the solid electrolyte to the liquid electrolyte is 1:1 to 8:1, optionally 2: 1 to 6: 1.

Despite an unclear mechanism, the inventors have found that with the positive electrode and the separator containing a solid electrolyte, a liquid electrolyte being present between the separator and the negative electrode, and the mass ratio of the solid electrolyte to the liquid electrolyte being set to 1:1 to 8:1, optionally 2:1 to 6:1, energy density can be improved and good cycling performance can be achieved.

### [Negative electrode]

In some embodiments, the negative electrode includes a negative electrode current collector and a negative electrode membrane disposed on at least one surface of the negative electrode current collector. For example, the negative electrode current collector has two opposite surfaces in a thickness direction of the negative electrode current collector and the negative electrode membrane is applied on either or both of the two opposite surfaces of the negative electrode current collector.

In some examples, a material with good conductivity and mechanical strength may be used as the negative electrode current collector to conduct electricity and collect current. In some embodiments, a copper foil may be used as the negative electrode current collector.

In some embodiments, the negative electrode membrane contains a negative electrode material, where the negative electrode material includes at least one of lithium metal and lithium metal alloy. One of the inventive features of this application is that the negative electrode material includes at least one of lithium metal and lithium metal alloy. According to this application, the negative electrode material including at least one of lithium metal and lithium metal alloy can further improve energy density of a battery cell.

### [Positive electrode]

In some embodiments, the positive electrode includes a positive electrode current collector and a positive electrode membrane disposed on at least one surface of the positive electrode current collector and including a positive electrode active material. For example, the positive electrode current collector has two opposite surfaces in a thickness direction of the positive electrode current collector and the positive electrode membrane is applied on either or both of the two opposite surfaces of the positive electrode current collector.

In some examples, a material with good conductivity and mechanical strength may be used as the positive electrode current collector. In some examples, an aluminum foil may be used as the positive electrode current collector.

The positive active material is not limited to any specific type in this specification. Materials known in the art that can be used for positive electrodes of secondary batteries can be used, as selected by those skilled in the art based on actual needs.

In some embodiments, the secondary battery may be a lithium-ion secondary battery. The positive electrode active material may be selected from lithium transition metal oxide and modified materials thereof. The modified material may be lithium transition metal oxide being modified through doping and/or coating. For example, the lithium transition metal oxide may be selected from one or more of lithium cobalt oxide, lithium nickel oxide, lithium manganese oxide, lithium nickel manganese oxide, lithium nickel cobalt manganese oxide, lithium nickel cobalt aluminum oxide, and olivine-structured li-containing phosphate.

For example, the positive electrode active material of the secondary battery may be selected from one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂(NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ (LFP), and LiMnPO₄. In some embodiments, the positive electrode material of the secondary battery preferably includes at least one of lithium nickel cobalt manganate, lithium nickel cobalt aluminate, and lithium iron phosphate.

In some embodiments, the positive electrode membrane may further optionally include a binder. The binder is not limited to any specific type and may be selected by persons skilled in the art as required. For example, the binder for the positive electrode membrane may include one or more of polyvinylidene fluoride (PVDF) and polytetrafluoroethylene (PTFE).

In some embodiments, the positive electrode membrane further optionally includes a conductive agent. The conductive agent is not limited to any particular type and may be selected by those skilled in the art as required. For example, the conductive agent for the positive electrode membrane may include one or more of graphite, superconducting carbon, acetylene black, carbon black, Ketjen black, carbon dots, carbon nanotubes, graphene, and carbon nanofiber.

In some examples, the positive electrode membrane is a porous structure with a porosity of 5-30%, preferably 10-25%.

### [Separator]

The separator is sandwiched between the positive electrode and the negative electrode for separation. This application imposes no particular limitation on the type of the separator, which may be any well-known porous separator having good chemical stability and mechanical stability. In some embodiments, material of the separator may be selected from one or more of glass fiber, non-woven fabric, polyethylene, polypropylene, and polyvinylidene fluoride. The separator may be a single-layer thin film or a multi-layer composite thin film. When the separator is a multilayer composite film, its layers may be made of the same or different materials.

In some embodiments, the separator has a porosity of 30% to 70%, preferably 35% to 60%.

### [Electrode assembly body]

In some embodiments of this application, an electrode assembly body including a positive electrode, a negative electrode, and a separator located between the positive electrode and the negative electrode is prepared.

In some embodiments, after the electrode assembly body is prepared, electrolyte is injected thereinto.

### [Electrolyte]

The electrolyte conducts ions between the positive electrode plate and the negative electrode plate. Another inventive feature of this application is that the electrode assembly is provided with a solid electrolyte and a liquid electrolyte. Specifically, the positive electrode and the separator contain the solid electrolyte, the liquid electrolyte is present between the separator and the negative electrode, and a mass ratio of the solid electrolyte to the liquid electrolyte is set to 1:1 to 8:1, optionally 2:1 to 6:1. Setting the mass ratio to 1:1 to 8:1 can ensure that the volume of the solid electrolyte is slightly larger than a sum of porosity systems of the electrode plates and the separator. With the mass ratio being less than 1:1, the electrode plate cannot be filled with the solid electrolyte inside so that good transmission paths for ions cannot be established inside the electrode plate, making it hard for the liquid high-concentration electrolyte to infiltrate into the positive electrode. As a result, the extractable capacity is low and degrades quickly with the cycling. With the mass ratio being greater than 8:1, the negative electrode side contains part of the solid electrolyte, and there is little electrolyte flowing which is not enough to infiltrate the lithium metal negative electrode so that volume swelling caused by cycling accelerates the degradation of capacity of the battery cell.

### [Solid electrolyte]

In some embodiments, the solid electrolyte of this application is formed by an electrolyte solution to cure through a curing reaction via in-situ polymerization.

In some embodiments, the electrolyte solution to cure contains a first monomer, a second monomer, a first electrolyte solution, and an initiator.

In some embodiments, the first monomer is an acrylic (ester) monomer, which is specifically one or more selected from, for example, acrylic acid, methacrylic acid, methyl methacrylate, butyl methacrylate, methyl acrylate, ethyl acrylate, butyl acrylate, cyanoacrylate, polyethylene glycol diacrylate, tetraethylene glycol diacrylate, ethoxylated trimethylolpropane triacrylate, trimethylolpropane trimethacrylate, polypropylene glycol dimethacrylate, trimethylolpropane triacrylate, trimethylolpropane trimethacrylate, polycyclohexyl acrylate, trimethylolpropane triacrylate, trimethylolpropane trimethacrylate, ethylene glycol dimethacrylate, ethylene glycol dimethacrylate, N,N'-p-phenylbismaleimide, zinc diacrylate, and zinc dimethacrylate; and/or

In some embodiments, the second monomer is a carbonic ester monomer, which is specifically one or more selected from, for example, vinylene carbonate, vinyl ethylenecarbonate, ethylene carbonate, propylene carbonate, butylene carbonate, ethylene fluoroethylene carbonate, and ethyl chlorocarbonate; and/or

In some embodiments, the first electrolyte solution contains an electrolytic salt, where the electrolytic salt contained in the first electrolyte solution is specifically selected from one or more of, for example, lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the electrolytic salt contained in the first electrolyte solution may be the same as or different from an electrolytic salt contained in the liquid electrolyte, preferably the same.

A concentration of the electrolytic salt contained in the first electrolyte solution is 0.5-1.5 M/L.

In some embodiments, a mass ratio of the first monomer, the second monomer, and the first electrolyte solution is set to first monomer: second monomer: first electrolyte solution=(1%-20%):(1%-15%):(50%-99%), optionally first monomer: second monomer:first electrolyte solution=(3%-10%):(1 %-15%): (80%-95%).

In some embodiments, the initiator is a component able to initiate polymerization of the first monomer and the second monomer. Such initiator may be one or more selected from, for example, an organic peroxygen initiator, an inorganic peroxygen initiator, and an azo initiator. The organic peroxygen initiator may be one or more selected from, for example, peroxydicarbonamide, peroxycarboxylic acid esters, and peroxydicarbonate, where optionally, the organic peroxygen initiator includes one or more of dibenzoyl peroxide, lauroyl peroxide, tert-butyl peroxybenzoate, tert-butyl peroxypivalerate, diisopropyl peroxydicarbonate, and dicyclohexyl peroxydicarbonate. The inorganic peroxygen initiator may be selected from one or two of, for example, potassium persulfate and ammonium persulfate. The azo initiator may be selected from one or two of, for example, azobisisobutyronitrile and azobisisobutyronitrile. One of the above initiators may be used alone or two or more of them may be used in combination.

In some embodiments, the amount of the initiator used may be set as appropriate for the polymerization reaction. In some embodiments, with respect to an aggregate mass of the first monomer and the second monomer, amount of the initiator is set to below 1-10wt%, optionally below 1-5wt%.

In some embodiments, the electrolyte solution to cure is prepared through a conventional method of mixing the first monomer, the second monomer, the first electrolyte solution, and the initiator.

In some embodiments, the electrolyte solution to cure is injected into the electrode assembly body including a positive electrode, a negative electrode, and a separator located between the positive electrode and the negative electrode and the electrolyte solution to cure undergoes a curing reaction via in-situ polymerization to produce a solid electrolyte. More specifically, the electrolyte solution to cure injected into the electrode assembly body penetrates into the positive electrode and the separator and then undergoes an in-situ polymerization reaction to become a solid electrolyte.

In this application, reaction conditions for in-situ polymerization may be selected as appropriate to actual circumstances and requirements. For example, a reaction time of the curing reaction via in-situ polymerization is set to 10 seconds to 12 hours, optionally 10 seconds to 5 hours.

In addition, in this application, the initiation method of the curing reaction via in-situ polymerization may be selected as appropriate to actual circumstances and requirements. The initiation method of the curing reaction via in-situ polymerization may be one or more selected from, for example, ultraviolet initiation, electron beam initiation, and initiator initiation. The specific conditions may be, for example, in the case of ultraviolet initiation, an ultraviolet irradiation power is 2-5 W/cm² and an ultraviolet irradiation time is 10-300 seconds; in the case of electron beam initiation, an adsorption amount of a battery unit is 30 Gy to 30 kGy; and in the case of using the foregoing initiators for initiation, a heating temperature is 50°C to 85°C and a heating time is 1-12 hours.

In this application, almost all electrolyte solution to cure is cured into solid electrolyte through in-situ polymerization. In some embodiments, the electrolyte solution to cure may have residue, where the amount of residue is less than 5wt% of the total amount of the electrolyte solution to cure.

### [Liquid electrolyte]

In this application, after the solid electrolyte is obtained, a liquid electrolyte is injected into the electrode assembly body. The liquid electrolyte contains a solvent and an electrolytic salt.

In some embodiments, the solvent is one or more selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, methylsulfone acetate, and diethyl sulfone.

In some embodiments, the electrolytic salt is one or more selected from lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the electrolytic salt in the liquid electrolyte has a concentration of 2-6 M/L, preferably 4-6 M/L. The electrolytic salt having an excessively low concentration results in a large amount of free solvent in the liquid electrolyte, causing increasing side reactions; on the other hand, the electrolyte having an excessively high concentration results in cost increase and excessive electrolytic salt which is not dissolved in the solvent, causing a waste of electrolytic salt.

### [Preparation method of electrode assembly]

In an embodiment of this application, this application provides a preparation method of electrode assembly, which includes the following steps:
a step of injecting an electrolyte solution to cure into an electrode assembly body including a positive electrode, a negative electrode, and a separator located between the positive electrode and the negative electrode;
a step of implementing a curing reaction via in-situ polymerization on the electrolyte solution to cure to obtain a solid electrolyte; and
a step of injecting a liquid electrolyte into the electrode assembly body.

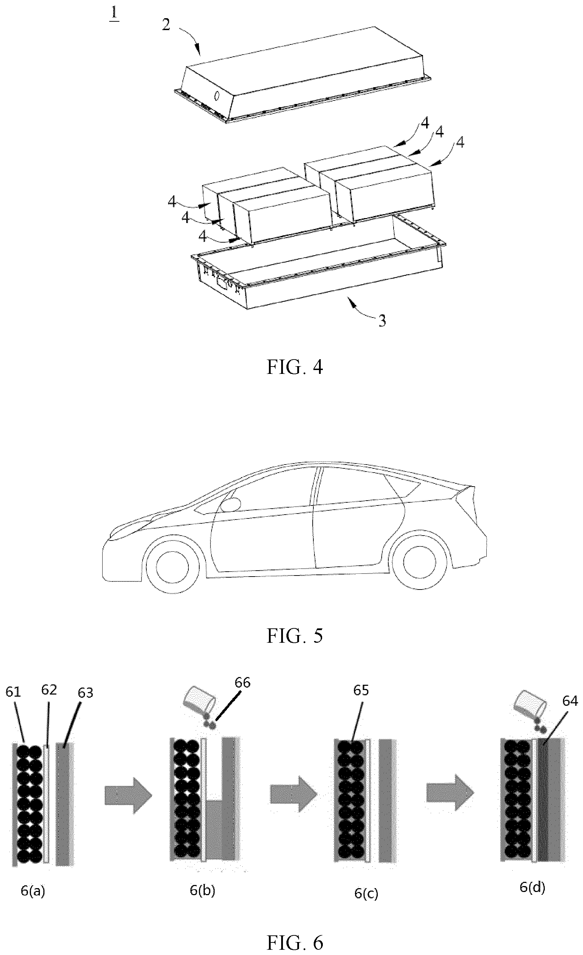

Specific description will be made hereinafter with reference to FIG. 6 on the preparation method of electrode assembly.

As shown in FIG. 6(a), firstly, a positive electrode 61, a negative electrode 63, and a separator 62 are used to prepare an electrode assembly body. The electrode assembly body includes the positive electrode, the negative electrode, and the separator located between the positive electrode and the negative electrode, where the negative electrode contains a negative electrode material and the negative electrode material includes at least one of lithium metal and lithium metal alloy.

Secondly, as shown in FIG. 6(b), an electrolyte solution 66 to cure is injected into the electrode assembly body. In this case, most of the electrolyte solution to cure penetrates into the positive electrode through the separator. This is because, in one aspect, the negative electrode membrane is made of lithium metal and/or lithium metal alloy and therefore is unable to absorb the electrolyte solution to cure; in another aspect, the positive electrode membrane is a porous structure which can absorb the electrolyte solution to cure via capillary action; and besides, the separator is also a porous structure so that most of the electrolyte solution to cure penetrates into the positive electrode through the separator and the electrolyte solution to cure is contained in the positive electrode and the separator.

Subsequently, as shown in FIG. 6(c), a curing reaction is implemented via in-situ polymerization on the electrolyte solution to cure to obtain a solid electrolyte. Therefore, the positive electrode and the separator contain the solid electrolyte 65.

Then, as shown in FIG. 6(d), a liquid electrolyte 64 is injected into the electrode assembly body.

As described above, in this application, different forms of electrolyte are used for the positive electrode side and the negative electrode side respectively so as to establish a new battery system. Specifically, as described above, in the electrode assembly of this application, the positive electrode and the separator contain solid electrolyte. Therefore, the electrolyte on the positive electrode side is in solid state. This state does not impact conduction of lithium ions, guaranteeing internal transmission paths for ions, without impacting the lithium metal negative electrode. In addition, a liquid electrolyte is present between the separator and the negative electrode, which means that the electrolyte on the negative electrode side is a high-concentration electrolyte solution which can protect the lithium metal. Thus, in this application, with in-situ curing used to facilitate infiltration into the positive electrode and the separator, the problem of difficult infiltration of high-concentration electrolyte solutions is resolved. In addition, in this application, the high-concentration electrolyte solution reduces side reactions of the lithium metal and the electrolyte solution, protecting cycling performance of the lithium metal negative electrode. Besides, the high-concentration electrolyte solution ensures contact between the separator and the lithium metal, guaranteeing transmission paths for lithium ions of the battery.

In the preparation method of an electrode assembly according to this application, as described above, the firstly injected electrolyte solution to cure is conventionally liquid. After infiltration of the injected electrolyte solution to cure, due to porous structures of a positive electrode plate and the separator, the electrolyte solution to cure is first filled in porosities of the two parts under the capillary action. Subsequently, with the electrolyte solution to cure being cured, transmission paths for ions are established inside the positive electrode and the separator to ensure that the internal capacity of the positive electrode can be properly extracted. Besides, the cured electrolyte solution has no impact on the liquid electrolyte (that is, high-concentration lithium salt electrolyte solution) injected at the second time of injection. In addition, in this application, the liquid electrolyte (that is, high-concentration lithium salt electrolyte solution) has little free solvent, which can effectively alleviate side reactions of the lithium metal, thus achieving a long cycle life of the lithium metal. Meanwhile, as described above, because transmission paths for ions have been established inside the positive electrode and the separator, the problem of difficult infiltration of high-concentration electrolyte solutions into the electrode plate is of no necessity to consider.

### [Secondary battery]

In the embodiments of this application, a secondary battery is provided which includes the electrode assembly of this application. Normally, the secondary battery includes a positive electrode, a negative electrode, an electrolyte, and a separator. In a charging and discharging process of a battery, active ions are intercalated and deintercalated between the positive electrode and the negative electrode. The electrolyte conducts ions between the positive electrode and the negative electrode. The separator is sandwiched between the positive electrode and the negative electrode to prevent short circuit of the positive electrode and negative electrode and to allow ions to pass through.

In some embodiments, the secondary battery may include an outer packaging for encapsulating the electrode assembly of this application. In some embodiments, the outer packaging of the secondary battery may be a soft pack, for example, a soft pouch. A material of the soft pack may be plastic, for example, one or more of polypropylene (PP), polybutylene terephthalate (PBT), polybutylene succinate (PBS), and the like. Alternatively, the outer packaging of the secondary battery may be a hard shell, for example, an aluminum shell.

In some embodiments, the electrode assembly of this application may be made through winding or lamination.

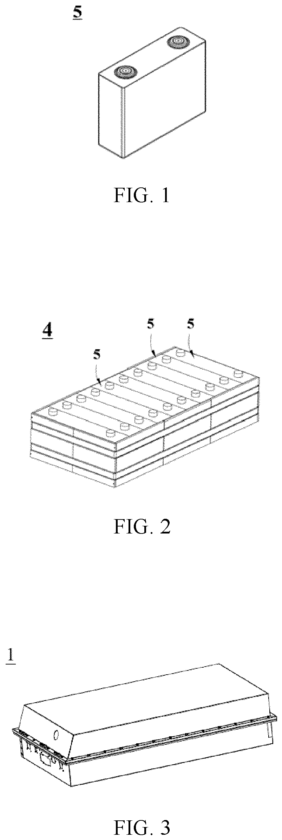

This application does not impose special limitations on the shape of the secondary battery, and the secondary battery may be cylindrical, rectangular, or of any other shapes. FIG. 1 shows a rectangular secondary battery 5 as an example.

### [Battery module]

The secondary battery of this application may be assembled into a battery module, where the battery module may include a plurality of secondary batteries, the specific quantity of which may be adjusted based on use and capacity of the battery module.

FIG. 2 shows a battery module 4 as an example. Referring to FIG. 2, in the battery module 4, a plurality of secondary batteries 5 may be sequentially arranged in a length direction of the battery module 4. Certainly, the batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

### [Battery pack]

The battery module of this application may be further assembled into a battery pack, where the quantity of battery modules included in the battery pack may be adjusted based on use and capacity of the battery pack.

FIG. 3 and FIG. 4 show a battery pack 1 as an example. Referring to FIG. 3 and FIG. 4, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### [Electric apparatus]

This application further provides an electric apparatus including the secondary battery of this application, where the secondary battery provides power supply for the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the apparatus.

FIG. 5 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of secondary batteries, a battery pack or a battery module may be used.

In another example, the electric apparatus may be a mobile phone, a tablet computer, a notebook computer, or the like. Such electric apparatus is generally required to be light and thin, and may use a secondary battery as its power source.

### Examples

The following describes examples of this application. The examples described below are illustrative and only used to explain this application, which cannot be understood as limitations on this application. Examples for which no technology or conditions are specified are made based on technology or conditions described in literature in the field, or made according to product instructions. Reagents or instruments used are all conventional products that are commercially available if no manufacturer is indicated.

### [Performance test]

### <Performance test 1: life test>

A life test was performed on secondary batteries at a constant temperature of 25°C. Test steps were as follows: The battery was left standing for 5 min and discharged to 2.8 V at 0.5C (72 mA), then left standing for 5 min and charged to 4.25 V at 1/3C, and then charged at a constant voltage of 4.25 V to a current less than or equal to 0.05 mA. Then, the battery was left standing for 5 min and discharged to 2.8 V at 1/3C, and a discharge capacity at that point was an initial discharged capacity which was recorded as D0. Subsequently, a cycling test was performed at the range of 2.8 V to 4.25 V according to the above steps and a capacity value Dn (n=1, 2, 3...) was for each cycle. When the capacity became Dn≤D0×80%, the number of cycles, n, was recorded as the cycle life. The n value was recorded in the column "Performance test 1: life test" of Table 1.

### <Performance test 2: low-power cycling performance>

The cycling process was described as above. When the capacity became Dn≤D0×80%, the cycling test continued; when the cell capacity became Dn≤D0×60%, the number cycles, m, of the battery cell was recorded, the number of cycles between 80% to 60%, m-n, was used as a second measure, and the (m-n) value was recorded in the column "Performance test 2: low-power cycling performance" of Table 1. The reason for selecting this measure is that the late-stage capacity decrease of a lithium metal battery is different from that of a battery cell having a conventional graphite negative electrode. To be specific, in the late stage, the consumption of electrolyte by reactions of the lithium metal results in defects in the internal paths for ions, accelerating the capacity decrease of the battery.

### Example 1

### <Preparation of positive electrode plate>

NCM811, a conductive agent acetylene black, and a binder polyvinylidene difluoride (PVDF) were mixed at a weight ratio of 94:3:3 in an N-methylpyrrolidone solvent system and stirred thoroughly to obtain a uniform mixture. Then the mixture was applied onto an aluminum foil, dried and cold pressed, and the mixture was applied onto the other side to obtain a positive electrode plate with two sides coated (with a loading amount of 17.6mg/cm² on one side). The plate was cut into a corresponding size (4 cm×5 cm) for late use.

### <Preparation of negative electrode plate>

A 50 µm thick lithium foil was applied on a surface of a copper foil, followed by cold pressing to prepare a lithium metal negative electrode. The copper foil composited with lithium metal and a bare copper foil were cut into the size (4.2 cm×5.2 cm) or late use.

### <Assembling of electrode assembly body>

A polyethylene (PE) porous polymer film was used as a separator. Positive electrodes with coating on both sides and negative electrodes with coating on one side were used to assemble a laminated cell. A negative electrode, a separator, a positive electrode, a separator, and a negative electrode were stacked in the order of description to assemble a bare cell, so that the separator was sandwiched between the positive electrode and the negative electrode for separation. The bare cell was placed in an outer packaging to obtain a dry cell. This dry cell was the electrode assembly body.

### <Injecting electrolyte into battery>

The first electrolyte contained a solvent composed of EC:EMC:DMC=1:1:1 and an electrolytic salt which was a lithium salt LiFSI. The specific concentration of the lithium salt is given in Table 1.

A composition of the electrolyte solution to cure is as follows:
polyethylene glycol diacrylate:vinylene carbonate:first electrolyte solution (mass ratio)=10: 10:80. The initiator in the electrolyte solution to cure was azodiisobutyronitrile (its amount was 0.2% of the total amount of solvent).

Specific steps are as follows in sequence:
(1) The electrolyte solution to cure was injected into the electrode assembly body first. The amount of injection is given in Table 1.
(2) The electrode assembly body was infiltrated in vacuum for 12 hours and put into an oven to let the electrolyte solution cure with the temperature kept at 70°C for 6 hours. If no electrolyte solution to cure was injected, the vacuum infiltration and 70°C temperature preservation were skipped.
(3) After curing, the liquid electrolyte was injected into the electrode assembly body, which was then sealed in vacuum and left standing for infiltration.

### Examples 2 to 9

Examples 2 to 9 were prepared by the same method as Example 1 except that, as shown in Table 1, the amount of the solid electrolyte and/or the liquid electrolyte and/or the concentration of the electrolytic salt in the liquid electrolyte were adjusted as appropriate.

Example 10 was prepared by the same method as Example 3 except for the difference shown in Table 1 that lithium metal was replaced by bare copper foil to prepare the negative electrode plate.

### Comparative Examples 1 to 6

Comparative Examples 1 to 6 were prepared by the same method as Example 1 except for the differences shown in Table 1.

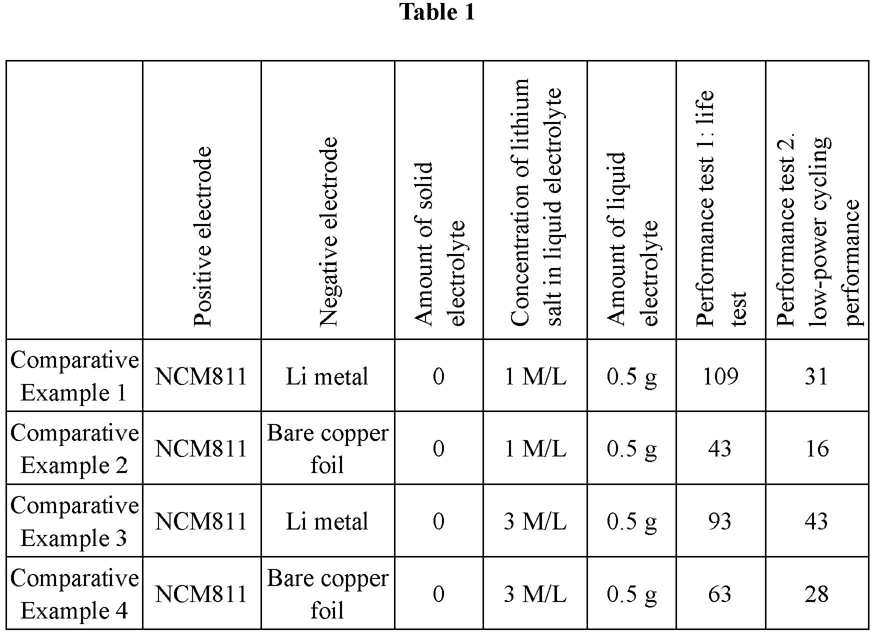

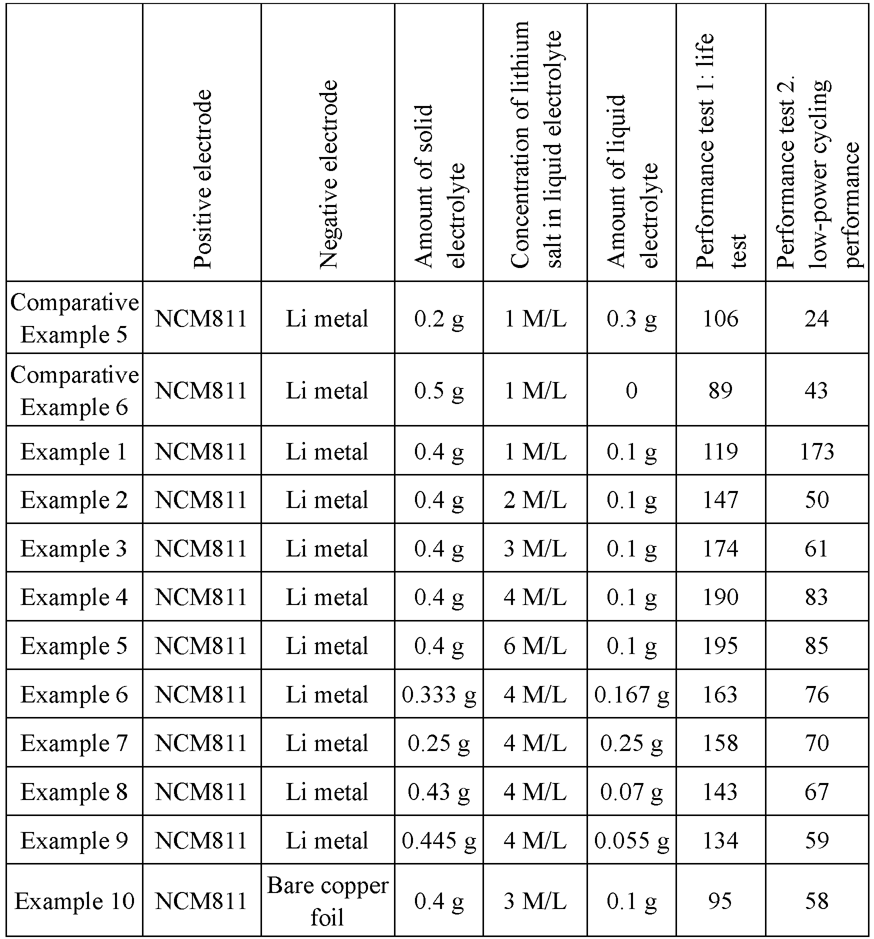

As can be seen from a comparison between the examples and comparative examples as shown in Table 1, with the positive electrode and the separator containing a solid electrolyte, a liquid electrolyte being present between the separator and the negative electrode, and the mass ratio of the solid electrolyte to the liquid electrolyte set to 1: 1 to 8:1, good cycling performance is achieved by the present invention; in the case of an excessively high ratio of the solid electrolyte to the liquid electrolyte, there is a large amount of solid state content such that volume swelling during cycling can result in an 80% decrease of the cycle life of the battery cell, which, but in comparison with conventional electrolyte solutions, the cured electrolyte solution can still deliver slightly superior cycling performance because it has a lower degree of reaction with the lithium metal; in the case of a relatively low ratio of the solid electrolyte to the liquid electrolyte, it is difficult for the high-concentration electrolyte solution to infiltrate into the complete inside of the positive electrode, reducing the extractable capacity of the positive electrode and degrading the cycling performance. Also, as the high-concentration electrolyte solution has a lower reaction speed with the lithium metal, the cycle life e under cell capacity between 80% and 60% is increased.

It should be noted that this application is not limited to the foregoing embodiments. The foregoing embodiments are merely examples, and embodiments having constructions with substantially the same technical idea and having the same effects within the scope of the technical solutions of this application are all included in the technical scope of this application. In addition, various modifications to the embodiments herein that can be envisioned by persons skilled in the art and other manners constructed by combining some of the constituent elements in the embodiments are also included in the scope of this application, provided that such modifications and combinations do not depart from the essence of this application.

## Claims

1. An electrode assembly, comprising:
a positive electrode, a negative electrode, and a separator located between the positive electrode and the negative electrode, wherein
the positive electrode and the separator contain a solid electrolyte,
the liquid electrolyte is present between the separator and the negative electrode, and
a mass ratio of the solid electrolyte to the liquid electrolyte is 1:1 to 8:1, optionally 2:1 to 6:1.

2. The electrode assembly according to claim 1, wherein
the liquid electrolyte contains a solvent and an electrolytic salt with a concentration of 2-6 M/L.

3. The electrode assembly according to claim 2, wherein
the solvent is one or more selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, methylsulfone acetate, and diethyl sulfone.

4. The electrode assembly according to claim 2 or 3, wherein
the electrolytic salt is one or more selected from lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

5. The electrode assembly according to any one of claims 1 to 4, wherein
the solid electrolyte is formed by an electrolyte solution to cure through a curing reaction via in-situ polymerization.

6. The electrode assembly according to claim 5, wherein
the electrolyte solution to cure contains a first monomer, a second monomer, a first electrolyte solution, and an initiator, wherein
optionally, the first monomer is an acrylic acid (ester) monomer and the second monomer is a carbonic ester monomer, and/or
optionally, a mass ratio of the first monomer, the second monomer, and the first electrolyte solution is first monomer: second monomer:first electrolyte solution=(1%-20%):(1%-15%):(50%-99%), optionally first monomer: second monomer:first electrolyte solution=(3%-10%):(1%-15%):(80%-95%).

7. The electrode assembly according to claim 6, wherein
the first monomer is one or more selected from acrylic acid, methacrylic acid, methyl methacrylate, butyl methacrylate, methyl acrylate, ethyl acrylate, butyl acrylate, cyanoacrylate, polyethylene glycol diacrylate, tetraethylene glycol diacrylate, ethoxylated trimethylolpropane triacrylate, trimethylolpropane trimethacrylate, polypropylene glycol dimethacrylate, trimethylolpropane triacrylate, trimethylolpropane trimethacrylate, polycyclohexyl acrylate, trimethylolpropane triacrylate, trimethylolpropane trimethacrylate, ethylene glycol dimethacrylate, ethylene glycol dimethacrylate, N,N'-p-phenylbismaleimide, zinc diacrylate, and zinc dimethacrylate; and/or
the second monomer is one or more selected from vinylene carbonate, vinyl ethylenecarbonate, ethylene carbonate, propylene carbonate, butylene carbonate, ethylene fluoroethylene carbonate, and ethyl chlorocarbonate; and/or
the first electrolyte solution contains an electrolytic salt, wherein the electrolytic salt is selected from one or more of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate; and/or
the initiator is one or more selected from an organic peroxygen initiator, an inorganic peroxygen initiator, and an azo initiator; and/or
with respect to an aggregate mass of the first monomer and the second monomer, amount of the initiator is below 1-10wt%, optionally below 1-5wt%.

8. The electrode assembly according to claim 7, wherein
the organic peroxygen initiator is one or more selected from peroxydicarbonamide, peroxycarboxylic acid esters, and peroxydicarbonate, wherein optionally, the organic peroxygen initiator comprises one or more of dibenzoyl peroxide, lauroyl peroxide, tert-butyl peroxybenzoate, tert-butyl peroxypivalerate, diisopropyl peroxydicarbonate, and dicyclohexyl peroxydicarbonate; and/or
the inorganic peroxygen initiator is selected from one or two of potassium persulfate and ammonium persulfate; and/or
the azo initiator is selected from one or two of azobisisobutyronitrile and azobisisobutyronitrile.

9. The electrode assembly according to any one of claims 1 to 8, wherein
the positive electrode contains a positive electrode material, wherein the positive electrode material comprises at least one of lithium nickel cobalt manganate, lithium nickel cobalt aluminate, and lithium iron phosphate; and/or
the negative electrode contains a negative electrode material, wherein the negative electrode material comprises at least one of lithium metal and lithium metal alloy.

10. A preparation method of electrode assembly, which comprises the following steps:
a step of injecting an electrolyte solution to cure into an electrode assembly body including a positive electrode, a negative electrode, and a separator located between the positive electrode and the negative electrode;
a step of implementing a curing reaction via in-situ polymerization on the electrolyte solution to cure to obtain a solid electrolyte; and
a step of injecting a liquid electrolyte into the electrode assembly body.

11. The preparation method of electrode assembly according to claim 10, wherein
the electrolyte solution to cure contains a first monomer, a second monomer, a first electrolyte solution, and an initiator, wherein
optionally, the first monomer is an acrylic acid (ester) monomer and the second monomer is a carbonic ester monomer, and/or
optionally, a mass ratio of the first monomer, the second monomer, and the first electrolyte solution is first monomer:second monomer:first electrolyte solution =(1%-20%):(1%-15%):(50%-99%), optionally first monomer:second monomer:first electrolyte solution=(3%-10%):(1%-15%):(80%-95%).

12. The preparation method of electrode assembly according to claim 11, wherein
the first monomer is one or more selected from acrylic acid, methacrylic acid, methyl methacrylate, butyl methacrylate, methyl acrylate, ethyl acrylate, butyl acrylate, cyanoacrylate, polyethylene glycol diacrylate, tetraethylene glycol diacrylate, ethoxylated trimethylolpropane triacrylate, trimethylolpropane trimethacrylate, polypropylene glycol dimethacrylate, trimethylolpropane triacrylate, trimethylolpropane trimethacrylate, polycyclohexyl acrylate, trimethylolpropane triacrylate, trimethylolpropane trimethacrylate, ethylene glycol dimethacrylate, ethylene glycol dimethacrylate, N,N'-p-phenylbismaleimide, zinc diacrylate, and zinc dimethacrylate; and/or
the second monomer is one or more selected from vinylene carbonate, vinyl ethylenecarbonate, ethylene carbonate, propylene carbonate, butylene carbonate, ethylene fluoroethylene carbonate, and ethyl chlorocarbonate; and/or
the first electrolyte solution contains an electrolytic salt, wherein the electrolytic salt is selected from one or more of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate; and/or
the initiator is one or more selected from an organic peroxygen initiator, an inorganic peroxygen initiator, and an azo initiator; and/or
with respect to an aggregate mass of the first monomer and the second monomer, amount of the initiator is below 1-10wt%, optionally below 1-5wt%.

13. The preparation method of electrode assembly according to claim 12, wherein
the organic peroxygen initiator is one or more selected from peroxydicarbonamide, peroxycarboxylic acid esters, and peroxydicarbonate, wherein optionally, the organic peroxygen initiator comprises one or more of dibenzoyl peroxide, lauroyl peroxide, tert-butyl peroxybenzoate, tert-butyl peroxypivalerate, diisopropyl peroxydicarbonate, and dicyclohexyl peroxydicarbonate; and/or
the inorganic peroxygen initiator is selected from one or two of potassium persulfate and ammonium persulfate; and/or
the azo initiator is selected from one or two of azobisisobutyronitrile and azobisisobutyronitrile.

14. The preparation method of electrode assembly according to any one of claims 10 to 13, wherein
a reaction time of the curing reaction via in-situ polymerization is 10 seconds to 12 hours, optionally 10 seconds to 300 seconds.

15. The preparation method of electrode assembly according to any one of claims 10 to 14, wherein
an initiation method of the curing reaction via in-situ polymerization is one or more selected from ultraviolet initiation, electron beam initiation, and initiator initiation; wherein
optionally, in the case of ultraviolet initiation, an ultraviolet irradiation power is 2-5 W/cm² and an ultraviolet irradiation time is 10-300 seconds;
optionally, in the case of electron beam initiation, an adsorption amount of a battery unit is 30 Gy to 30 kGy; and
optionally, in the case of initiator initiation, a heating temperature is 50°C to 85°C and a heating time is 1-12 hours.

16. The preparation method of electrode assembly according to any one of claims 10 to 15, wherein
the liquid electrolyte contains a solvent and an electrolytic salt with a concentration of 2-6 M/L.

17. The preparation method of electrode assembly according to claim 16, wherein
the solvent is one or more selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, methylsulfone acetate, and diethyl sulfone.

18. The preparation method of electrode assembly according to claim 16 or 17, wherein
the electrolytic salt is one or more selected from lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

19. A secondary battery, comprising the electrode assembly according to any one of claims 1 to 9 or an electrode assembly prepared by using the preparation method of electrode assembly according to any one of claims 10 to 18.

20. A battery module, comprising the secondary battery according to claim 19.

21. A battery pack, comprising the battery module according to claim 20.

22. An electric apparatus, comprising at least one of the secondary battery according to claim 19, the battery module according to claim 20, or the battery pack according to claim 21.
